# EUROPÄISCHE PATENTSCHRIFT

(11) **EP 0 570 792 B1**
(45) Veröffentlichungstag und Bekanntmachung des Hinweises auf die Patenterteilung: **05.02.1997**
(21) Anmeldenummer: 93107544.4
(22) Anmeldetag: 10.05.1993
(51) Int. Cl.: A01B 69/02, A01C 7/08

(54) **Verfahren zum Anlegen von Markierungsstreifen mit einer Sämaschine**
Process to draw marking rows with a seeder
Procédé pour tracer des lignes de marquage avec un semoir

(30) Priorität: 18.05.1992 DE 4216018
(43) Veröffentlichungstag der Anmeldung: 24.11.1993
(73) Patentinhaber: Amazonen-Werke H. Dreyer GmbH & Co. KG, D-49205 Hasbergen (DE)
(72) Erfinder: Scheufler, Bernd, Dr.-Ing., W-4507 Hasbergen (DE)

(56) Entgegenhaltungen:
- EP-A- 0 176 023
- EP-A- 0 193 804
- EP-A- 0 463 397
- DE-A- 4 012 395
- DE-B- 3 017 415
- US-A- 3 949 686
- POWER FARMING Bd. 56, Nr. 7, Juli 1977, SUTTON, GB Seiten 10 - 14 S. HOWE 'Working on the right lines'

## Beschreibung

Die Erfindung betrifft ein Verfahren zum Anlegen von Markierungsstreifen mit einer Sämaschine gemäß des Oberbegriffes des Patentanspruches 1.

Durch die DE-OS 40 12 395 ist ein Verfahren zur Steuerung landwirtschaftlicher Verteilmaschinen in Abhängigkeit von ihrem Ort auf einer zu bestellenden Fläche bekannt geworden. Zur Steuerung der Verteilmaschine ist die zu bestellende Fläche in einem Eichvorgang durch eine lineare Abwicklung auf einem Speichermedium ausgebildet und für "Einfach-" und "Mehrfachfahrgassensysteme" ausgelegt. Das heißt, diese Fläche wird durch das Befahren vorgegebener Fahrgassen abgearbeitet und die verteilmaschine entsprechend gesteuert. Somit ist es beispielsweise möglich, die Grunddüngung im Einfachfahrgassensystem durchzuführen, während spätere Düngungen im Mehrfachfahrgassensystem durchgeführt werden können. Hierdurch ist beispielsweise die Grunddüngung mit einer Arbeitsbreite von z.B. 12 m, die Zwischendüngung mit einer Arbeitsbreite von 24 m und die Schlußdüngung mit einer Arbeitsbreite von 36 m durchführbar. Hierzu wird dann bei der Grunddüngung jede Fahrgasse befahren, während bei der Zwischendüngung nur jede zweite und bei der Schlußdüngung nur jede dritte befahren wird.

Bei dieser bekannten Ausführungsform sind das Speichermedium und die elektronische Steuerung derart ausgebildet, daß automatisch beim Eingeben des gewünschten Fahrgassensystems automatisch auf das entsprechende Steuerprogramm für die bei nachfolgenden Pflanzenschutz- und Düngemaßnahmen verwendeten Maschinen entsprechend umgestellt wird.

Durch das anschließende Abarbeiten der entsprechenden Fahrgassen des gewünschten Fahrgassensystems wird z. B. die Verteilmaschine nach einer Verteilcharakteristik für die jeweils befahrene Fahrgasse gesteuert. Je nach gewünschtem Fahrgassensystem muß der Schlepperfahrer die entsprechenden Fahrgassen befahren, und das Feld entsprechend abarbeiten. Die Steuerung der Verteilmaschine erfolgt dann automatisch entsprechend der jeweils befahrenen Fahrgasse.

Hier setzt nun die Erfindung ein und zeigt ein Verfahren zum Anlegen von Markierungsstreifen für die Laufräder von Fahrzeugen für nachfolgende Pflanzenschutz- und Düngemaßnahmen auf. Das hier aufgezeigte Verfahren stellt eine wesentliche Erleichterung für den Schlepperfahrer beim Abarbeiten eines Feldes anhand vorgegebener Markierungsstreifen (Fahrgassen) dar, da im gleichen Feld die benötigten Markierungsstreifen der für nachfolgende Pflanzenschutz- und Düngemaßnahmen verwendeten Maschinen für Maschinen größerer Arbeitsbreite anders als die zusätzlichen Markierungsstreifen für die Maschine mit kleinerer Arbeitsbreite gekennzeichnet sind.

Die unterschiedlich gekennzeichneten Markierungsstreifen stellen somit eine sehr einfache orientierungshilfe für den Schlepperfahrer bei nachfolgenden Pflanzenschutz- und Düngemaßnahmen und den hierbei verwendeten, unterschiedliche Arbeitsbreiten aufweisenden Maschinen dar, so daß er immer die richtige Fahrgasse leicht und unverwechselbar auffindet.

In einer besonders bevorzugten Ausführungsform ist erfindungsgemäß vorgesehen, daß die Markierungsstreifen für größere Arbeitsbreiten gänzlich saatgutfrei und die Markierungsstreifen für die kleineren Arbeitsbreiten intervallweise saatgutfrei gehalten werden. Dieses stellt eine wesentliche Erleichterung zur Orientierung des Schlepperfahrers auf dem Feld dar, da er beim Abarbeiten dieses Feldes nicht das komplette Fahrgassensystem berücksichtigen muß, sondern sich z.B. nur nach gänzlich saatgutfrei gehaltenen Markierungsstreifen oder aber nach intervallweise saatgutfrei gehaltenen Markierungsstreifen orientiert.

Weiterhin ist erfindungsgemäß vorgesehen, die Markierungsstreifen für die Maschinen mit größerer Arbeitsbreite farblich anders zu kennzeichnen als die Markierungsstreifen für die Maschinen mit kleinerer Arbeitsbreite. Darüberhinaus ist es auch möglich die Kennzeichnung der unterschiedlich zu kennzeichnenden Markierungsstreifen durch die Aussaat unterschiedlicher Saatgüter innerhalb der Markierungsstreifen vorzunehmen.

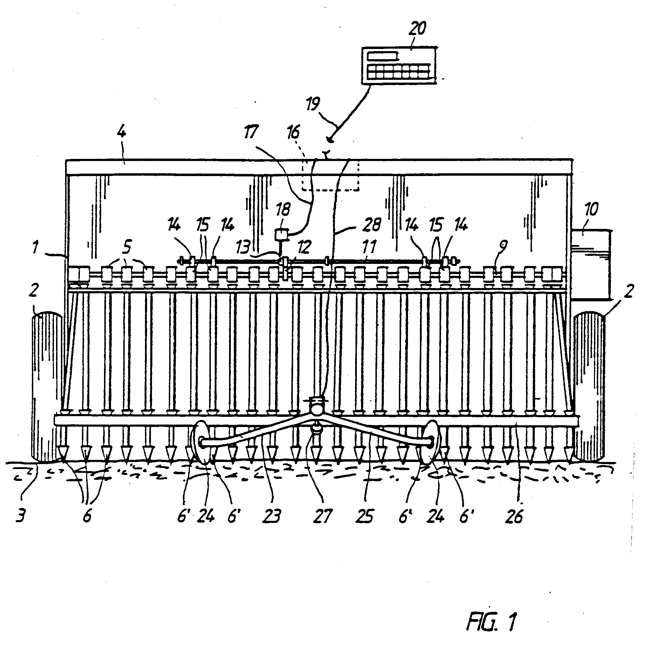

Weitere Einzelheiten der Erfindung sind den übrigen Unteransprüchen, der Beispielsbeschreibung und den Zeichnungen zu entnehmen. Hierbei zeigt
- Fig. 1: eine in erfindungsgemäßer Weise ausgerüstete Sämaschine in der Ansicht von hinten und
- Fig. 2: ein mit der in erfindungsgemäßer Weise ausgerüsteten Sämaschine angelegtes Feld in Prinzipdarstellung und in der Draufsicht.

Die Sämaschine wird über bekannte und daher nicht näher dargestellte Kupplungselemente an den Dreipunktkraftheber eines Ackerschleppers angekuppelt. Die Sämaschine weist den Rahmen 1 auf, der sich in abgesenkter Betriebsstellung über die Laufräder 2 auf dem Boden 3 abstützt und an dem der Vorratsbehälter 4 für das auszubringende Saatgut angeordnet ist. Das sich im Vorratsbehälter 4 befindliche Saatgut wird mittels der Dosierorgane 5 über die Säschare 6 in den Boden 3 in nebeneinander angeordnete Reihen abgelegt. Die Dosierorgane 5 sind als Dosierräder ausgebildet, wobei die das Saatgut zu den innerhalb der als Fahrgassen 8 ausgebildeten Markierungsstreifen angeordneten Säschare 6' zuführenden Dosierräder frei drehbar auf der Dosierwelle angeordnet sind. Diese Dosierwelle 9 wird von den Laufrädern 2 über das Regelgetriebe 10 angetrieben. Parallel zu der Dosierwelle 9 ist an dem Vorratsbehälter 4 oberhalb der Dosierräder die Vorgelegewelle 11 gelagert. Die Vorgelegewelle 11 ist über den Zahnradtrieb 12, der die Schlingfederkupplung 13 aufweist, drehmomentübertragbar mit der Dosierwelle 9 verbunden. Weiterhin sind auf der Vorgelegewelle 11 die Zahnräder 14 drehfest angeordnet, deren Verzahnung in die Verzahnung der auf der Dosierwelle 9 frei drehbar angeordneten Dosierräder 15 eingreift. Somit werden die Dosierräder 15 über die Vorgelegewelle 11 angetrieben, wenn die Schlingfederkupplung 13 eingeschaltet ist. Weiterhin ist an der Vorderseite der Sämaschine die Schaltvorrichtung 16 befestigt, die mittels des Kabels 17 mit dem als Hubmagnet 18 ausgebildeten Schaltelement verbunden ist. Mittels des Hubmagneten 18 erfolgt die Betätigung der Schlingfederkupplung 13. Die Schaltvorrichtung 16 weist eine Zählvorrichtung auf, die jeweils beim Wenden der Sämaschine am Feldende weiterzählt. Die Zählvorrichtung der Schaltvorrichtung 16 ist beim Ausführungsbeispiel so ausgelegt bzw. die auf dem Schlepper angeordnete und mittels des Kabels 19 mit der Schaltvorrichtung verbundenen Fernbedienungselementes 20 programmiert, daß sie z.B. bei jeder dritten Feldüberfahrt Impulse an die Schaltvorrichtung 16 übermittelt, so daß durch Ein- bzw. Ausschalten der Schlingfederkupplung 13 eine Fahrgasse angelegt bzw. nicht angelegt wird. Diese Schaltvorrichtung 16 weist neben der periodischen Schaltung zum Anlegen der Fahrgassen zusätzlich eine Schaltung auf, die das Anlegen unterschiedlich gekennzeichneter Fahrgassen (Markierungsstreifen) 8 bzw. 8' vornimmt. Diese zusätzliche Schaltung ist derart programmiert, daß die Fahrgassen 8 der für nachfolgende Pflanzenschutz- und Düngemaßnahmen verwendeten Maschine für Maschinen größerer Arbeitsbreite gänzlich saatgutfrei und die Fahrgassen 8' für die kleineren Arbeitsbreiten intervallweise Saatgutfrei gehalten werden. Somit wird die Saatgutzufuhr zu den Säscharen 6' über die Schaltvorrichtung 16, die den Hubmagneten 18 betätigt, in periodischer Wiederkehr derart unterbrochen, daß die Fahrgassen 8 für die Maschinen größerer Arbeitsbreiten gänzlich saatgutfrei und die Fahrgassen 8' für die Maschinen kleinerer Arbeitsbreiten intervallweise saatgutfrei gehalten werden. In den Fahrgassen 8' wird den Säscharen 6' also intervallweise Saatgut zugeführt, so daß sich saatgutfreie Abschnitte 21 mit den in den Fahrgassen 8' befindlichen besäten Abschnitten 22 aneinanderreihen. Die Länge dieser Abschnitte 21 und 22 läßt sich beim Anlegen der Fahrgassen 8' über die Fernbedienungsvorrichtung 20 vorwählen. Hierdurch ist es zum Erzeugen unterschiedlich gekennzeichneter Fahrgassen 8 und 8' auch möglich, diese Kennzeichnung durch unterschiedlich lange Abschnitte 21 und 22 vorzunehmen.

Hinter den Säscharen 6' ist die Vorauflaufmarkierungseinrichtung 23 angeordnet. Diese Vorauflaufmarkierungseinrichtung 23 weist z.B. die schräg angestellen Spuranreißerscheiben 24 auf, die drehbar an der Halterung 25 gelagert sind. Zwischen der Halterung 25 und dem Querbalken 26 ist die Hebe- und Senkvorrichtung 27 für die Vorauflaufmarkierungseinrichtung 23 angeordnet. Die Hebe- und Schwenkvorrichtung 27 ist über die Leitung 28 mit der Schaltvorrichtung 16 verbunden, so daß über die Hebe- und Schwenkvorrichtung 27 die Spuranreißerscheiben 24 beim Anlegen der Fahrgassen 8 bzw. 8', d.h., wenn die Saatgutzufuhr zu den Säscharen 6' gänzlich bzw. intervallweise unterbrochen ist, in die abgesenkte Position gebracht werden. In dieser abgesenkten Stellung dringen die Spuranreißerscheiben 24 in den Boden 3 ein und markieren durch ihre Schrägstellung und Drehbewegung jeweils eine Spur. Wenn keine Fahrgasse 8 bzw. 8' angelegt wird, werden die Spuranreißerscheiben 24 durch die Hebevorrichtung 27 in die angehobene Stellung gebracht. Das Anheben und Absenken der Spuranreißerscheiben 24 erfolgt im Gleichklang mit dem Ein- und Abschalten der Saatgutzufuhr zu den Fahrgassensäscharen 6' mittels des als Saatgutzufuhrunterbrechungselementes ausgebildeten Hubmagneten 18 sowohl gänzlich als auch intervallweise, so daß auch bereits bei noch nicht aufgelaufenem Getreide Fahrgassen 8 bzs. 8' unterschiedlicher Kennzeichnung erzeugt werden.

Werden nun die Fahrgassen 8' mit sich abwechselnden saatgutfreien und besäten Abschnitten 21 und 22 angelegt, werden die saatgutfreien Abschnitte 21 durch die Vorauflaufmarkierungseinrichtung 23 sichtbar gemacht. Die Vorauflaufmarkierungseinrichtung 23 also ständig angehoben und wieder abgesenkt, so daß sich die Vorauflaufmarkierungseinrichtung 23 in den saatgutfreien Abschnitten 21 der Fahrgassen 8', wenn kein Saatgut von den Dosierrädern 15 zu den Säscharen 6' gelangt, abgesenkt und in den besäten Abschnitten 22 angehoben wird.

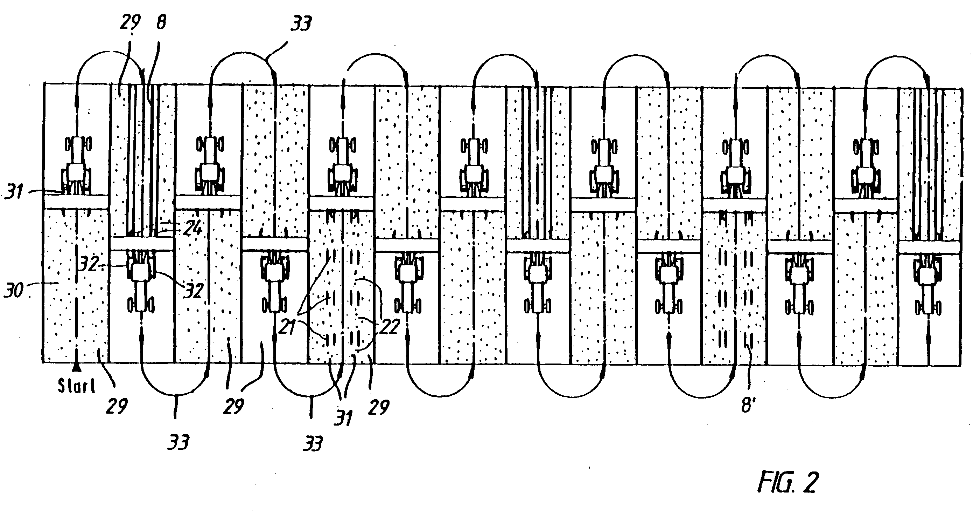

Über das in Fig. 2 dargestellte Feld wird die an den Schlepper angekuppelte Sämaschine in Hin- und Herfahrt gefahren, wobei die jeweiligen Arbeitsbahnen 29 der Sämaschine einen genauen Anschluß zueinander erhalten. Zur Verdeutlichung sind die mit Saatgut beschickten Flächen 30 des Feldes gepunktet wiedergegeben. Wie klar erkennbar ist, wird bei jeder dritten Arbeitsbahn 29 die Saatgutzufuhr für den Bereich der Spuren 31 der Schlepperräder 32 periodisch gänzlich oder intervallweise abgeschaltet. Hierdurch ergeben sich dann die gänzlich von Saatgut freigehaltenen Fahrgassen 8 oder die intervallweise saatgutfrei gehaltenen Fahrgassen 8' mit ihren saatgutfreien Abschnitten 21 und den besäten Abschnitten 22, die für das Befahren der Maschinen für nachfolgende Pflanzenschutz- und Düngemaßnahmen benutzt werden können. Damit diese angelegten Fahrgassen 8 bzw. 8' als Orientierungshilfe für nachfolgende Pflanzenschutz- und Düngemaßnahmen mit Maschinen unterschiedlicher Arbeitsbreite genutzt werden können, sind die Fahrgassen 8 und 8' unterschiedlich gekennzeichnet. Hierdurch ist die Orientierung des Schlepperfahrers auf dem abzuarbeitenden Feld erheblich vereinfacht.

Damit diese angelegten Fahrgassen 8 bzw. 8' schon vor dem Auflaufen des ausgesäten Getreides als Orientierungshilfe benutzt werden können, sind die Fahrgassen (Markierungsstreifen) bereits durch die Vorauflaufmarkierungseinrichtungen 23 unterschiedlich gekennzeichnet. Das Ab- und Einschalten der Saatgutzufuhr zu den Säscharen 6' in den Fahrgassen 8 bzw. 8' wird hierbei durch Betätigen der Schaltvorrichtung 16 bei dem durch die Pfeile 33 gekennzeichneten Wendevorgang am Feldende bewirkt.

## Patentansprüche

1. Verfahren zum Anlegen von Markierungsstreifen mit einer Sämaschine, die einen Vorratsbehälter (4) und Dosierorgane (5) aufweist, die das sich im Vorratsbehälter (4) befindliche Saatgut in einstellbaren Mengen Säelementen (6) zuführen, die dieses Saatgut in Reihen in den Boden ablegen, wobei in periodischer Wiederkehr in Abständen, die ein Vielfaches der Arbeitsbreite der Sämaschine entsprechen, die Saatgutzufuhr zu bestimmten Säelementen (6') durch über eine Schaltvorrichtung (16) zu betätigende Saatgutzufuhrunterbrechungselemente (13, 14, 18) abschaltbar ist, so daß Markierungsstreifen (8, 8') entstehen, die für die Laufräder von Fahrzeugen für nachfolgende Pflanzenschutz- und Düngemaßnahmen zum Befahren vorgesehen sind, dadurch gekennzeichnet, daß im gleichen Feld während des Säens die benötigten Markierungsstreifen (8) der für nachfolgende Pflanzenschutz- und Düngemaßnahmen verwendeten Maschinen für Maschinen größerer Arbeitsbreite anders als die zusätzlichen Markierungsstreifen (81) für die Maschinen mit kleinerer Arbeitsbreite gekennzeichnet sind.

2. Verfahren nach Anspruch 1, dadurch gekennzeichnet, daß die Markierungsstreifen (8) für die größeren Arbeitsbreiten gänzlich saatgutfrei und die Markierungsstreifen (81) für die kleineren Arbeitsbreiten intervallweise saatgutfrei gehalten werden.

3. Verfahren nach Anspruch 1, dadurch gekennzeichnet, daß die Markierungsstreifen (8) für die Maschinen mit größerer Arbeitsbreite farblich anders gekennzeichnet sind, als die Markierungsstreifen (81) für die Maschinen mit kleinerer Arbeitsbreite.

4. Verfahren zur Anlage von Markierungsstreifen nach einem oder mehreren der vorstehenden Ansprüche, dadurch gekennzeichnet, daß die Kennzeichnung der unterschiedlich zu kennzeichnenden Markierungsstreifen (8,81) durch die Aussaat unterschiedlicher Saatgüter erfolgt.

## Claims

1. Method of making marker strips by using a seed drill, which includes a hopper (4) and metering members (5), which supply the seeds, situated in the hopper (4), in adjustable quantities to sowing elements (6), which deposit these seeds in rows in the ground, the supply of seeds to predetermined sowing elements (6') being disconnectable by elements (13, 14, 18) for interrupting the supply of seeds in a periodic cycle at intervals, which correspond to a multiple of the working width of the seed drill, said interrupting elements being actuated by a switching device (16), so that marker strips (8, 8') are produced, which are provided for the running wheels of vehicles to travel along for subsequent plant protecting and fertilising measures, characterised in that the required marker strips (8) of the machines used for subsequent plant protecting and fertilising measures are distinguished differently for machines having a relatively large working width than the additional marker strips (81) for the machines having a relatively small working width in the same field during the sowing operation.

2. Method according to claim 1, characterised in that the marker strips (8) for the greater working widths are kept totally free of seeds, and the marker strips (81) for the smaller working widths are kept free of seeds at certain intervals.

3. Method according to claim 1, characterised in that the marker strips (8) for the machines having a greater working width are coloured differently from the marker strips (81) for the machines having a smaller working width.

4. Method according to one or more of the preceding claims, characterised in that the marker strips (8, 81), which are to be distinguished differently, are distinguished by the sowing of different seeds.

## Revendications

1. Procédé pour réaliser des bandes de marquage à l'aide d'un semoir comportant un réservoir (4) et des organes de dosage (5) pour fournir les semences du réservoir (4) en quantité réglable à des éléments d'ensemencement (6) qui déposent ces semences en rangées dans le sol, et à des intervalles qui se répètent périodiquement et représentent un multiple de la largeur de travail du semoir, l'alimentation en semences vers certains éléments d'ensemencement (6') est coupée par un dispositif de commutation (16) par des éléments de coupure de l'alimentation en semences (13, 14, 18) pour former des bandes de marquage (8, 8') pour être empruntée par les roues des véhicules effectuant les opérations de traitement de plantes et de distribution d'engrais ultérieurement,
caractérisé en ce que
dans le même champ, pendant l'ensemencement, on donne aux bandes de marquage (8) nécessaires aux machines effectuant les traitements de plantes et les distributions d'engrais ultérieurement, et ayant une largeur de travail plus grande, des caractéristiques différentes qu'aux bandes de marquage complémentaires (8') utilisées par les machines à petites largeurs de travail.

2. Procédé selon la revendication 1,
caractérisé en ce que
les bandes de marquage (8) pour les largeurs de travail importantes sont totalement sans semence et les bandes de marquage (8') pour les petites largeurs de travail sont libres de semences par intervalles.

3. Procédé selon la revendication 1,
caractérisé en ce que
les bandes de marquage (8) pour les machines à grandes largeurs de travail sont caractérisées par les couleurs différemment que les bandes de marquage (8') pour les machines à petites largeurs de travail.

4. Procédé pour réaliser des bandes de marquage selon une ou plusieurs des revendications précédentes,
caractérisé en ce que
les caractéristiques données aux bandes de marquage (8, 8') différentes sont réalisées par l'émission de semences différentes.
